# EUROPÄISCHE PATENTSCHRIFT

(11) **EP 4 390 182 B1**
(45) Veröffentlichungstag und Bekanntmachung des Hinweises auf die Patenterteilung: **20.08.2025**
(21) Anmeldenummer: 23216401.2
(22) Anmeldetag: 13.12.2023
(51) Int. Cl.: F16H 61/00, F16H 61/02, F16H 57/04

(54) **ÖLVERSORGUNGSVORRICHTUNG**
OIL SUPPLY DEVICE
DISPOSITIF D'ALIMENTATION EN HUILE

(30) Priorität: 21.12.2022 AT 509802022
(43) Veröffentlichungstag der Anmeldung: 26.06.2024
(73) Patentinhaber: VDS Holding GmbH, 4493 Wolfern (AT)
(72) Erfinder: Mayr, Wilfried, 4431 Haidershofen (AT)
(74) Vertreter: Babeluk Patentanwälte GmbH

(56) Entgegenhaltungen:
- DE-A1- 102012 113 113
- JP-A- 2005 172 112
- US-B2- 9 574 655

## Beschreibung

Die Erfindung betrifft eine Ölversorgungsvorrichtung für den Hydraulikkreislauf eines Getriebes, insbesondere eines Verzweigungsgetriebes, mit zumindest einer ersten Pumpe und einer zweiten Pumpe, wobei die erste Pumpe eine mit einer Schmier- und Kühlleitung verbindbare erste Druckleitung und eine mit einem Öltank verbundene erste Saugleitung und die zweite Pumpe eine mit einer Versorgungsleitung zur Betätigung des Getriebes verbundene oder verbindbare zweite Druckleitung und eine mit dem Öltank verbundene zweite Saugleitung aufweist, wobei in der ersten Druckleitung ein Steuerventil angeordnet ist, welches eine mit der zweiten Druckleitung verbundene erste Steuerleitung aufweist und ausgebildet ist, um die erste Druckleitung zu sperren, wenn der Druck in der zweiten Druckleitung unterhalb eines definierten Schaltdruckwertes liegt, und wobei die erste Druckleitung und die zweite Druckleitung über ein in Richtung der zweiten Druckleitung öffnendes Rückschlagventil verbunden sind, wobei zur Umgehung des Steuerventils eine Umgehungsleitung zwischen einem Steuerventileintritt und einem Steuerventilaustritt des Steuerventils angeordnet ist.

Bei einer derartigen Ölversorgungsvorrichtung dient die erste Druckleitung zur Versorgung eines Schmier- und Kühlkreislaufes und die zweite Druckleitung als Versorgungsleitung für die Betätigung des Getriebes.

Bekannte Ölversorgungsvorrichtungen haben den Nachteil, dass in Betriebsbereichen mit geringer Antriebsdrehzahl der zweiten Pumpe und einer hoher Öltemperatur der Druck in der Versorgungsleitung ein erforderlicher Minimaldruck unterschritten werden kann.

Die DE 103 18 152 B4 offenbart eine Ölversorgungsvorrichtung für den Hydraulickreislauf eines Fahrzeuggetriebes mit einer ersten Hydraulikpumpe und einer zweiten Hydraulikpumpe. Der Hydraulikkreis weist einen Niederdruck- und einen Hochdruckkreis auf. Die erste Pumpe ist von einer ersten Welle und die zweite Pumpe von einer zweiten Welle mechanisch antreibbar. Die Ölversorgungsvorrichtung weist eine hydraulische Steuer-/Regelungsschaltung, eine erste und eine zweite Eingangsleitung und eine erste und eine zweite Ausgangsleitung auf, wobei jede der beiden Pumpen an jeweils eine Eingangsleitung angeschlossen ist, und wobei der Niederdruckkreis von der ersten Ausgangsleitung und der Hochdruckkreis von der zweiten Ausgangsleitung versorgbar ist. Der Hochdruckkreis wird im Wesentlichen durch die erste Pumpe und der Niederdruckkreis im Wesentlichen durch die zweite Pumpe gespeist. In der ersten Druckleitung ist ein Steuerventil angeordnet, welches eine mit der zweiten Druckleitung verbundene Steuerleitung aufweist. Die erste Druckleitung und die zweite Druckleitung sind über ein in Richtung der zweiten Druckleitung öffnendes Rückschlagventil verbunden. Dadurch kann in bestimmten Fahrzuständen des Kraftfahrzeuges, nämlich dann, wenn der Druck- bzw. Volumenstrom im Hochdruckkreis nicht ausreicht, der Hochdruckkreis zusätzlich oder ausschließlich durch die erste Pumpe gespeist werden. Ein Ölüberschuss des Hochdruckstranges wird zum Niederdruckkreis geleitet, wobei eine Anordnung von weiteren Steuerventilen, Sensoren und Steuerleitungen erforderlich ist. Diese Ölversorgungsvorrichtung ist somit vom Aufbau und der Steuerung her relativ aufwändig.

Die DE 10 2011 102 451 B4 beschreibt ein hydrostatisches Antriebssystem mit einer Speisepumpe zur Versorgung eines Speisedruckkreises mit mehreren Verbrauchern, wobei der Speisedruckkreis als Konstantdrucksystem ausgebildet ist. Die Speisepumpe ist als aus einem Behälter Druckmittel ansaugende sauggedrosselte Pumpe ausgebildet, die in einem offenen Kreislauf betrieben wird. Die Pumpe ist zur Veränderung des Förderstroms mit einer Volumenstrombegrenzungseinrichtung versehen, die in Abhängigkeit eines zu dem Behälter abströmenden Rücklaufvolumenstromes gesteuert wird. Dadurch erfolgt eine dynamische Anpassung der Fördermenge und des Förderstroms der Pumpe an den Bedarf der Verbraucher, wobei ein Druckmittelspeicher mit geringer Speichergröße und einem geringen Druckmittelvolumen verwendet werden kann.

Die DE 102 07 076 A1 beschreibt eine Ölversorgungseinrichtung für ein Lastschaltgetriebe mit einem Hochdruck-Kreis und einem Niederdruck-Kreis, wobei die Hochdruck-Zuleitung zu den Verbrauchern des Getriebes über eine klein dimensionierte Zulaufblende geführt ist. Zwischen Zulaufblende und Verbrauchern ist die Niederdruck-Zuleitung angeschlossen, wobei die Niederdruck-Zuleitung durch ein Rückschlagventil von der Hochdruck-Zuleitung trennbar ist.

Die DE 10 2018 219 170 A1 zeigt ein Ölsystem für ein Kraftfahrzeug mit einem Niederdruckzweig mit einer saugseitig mit einem ersten Ölreservoir verbundenen Niederdruckpumpe und einem Hochdruckzweig mit einer saugseitig mit einem zweiten Ölreservoir verbundenen Hochdruckpumpe, sowie einem Wegeventil, welches in Abhängigkeit des Druckes am Druckanschluss der Hochdruckpumpe so geschaltet wird, dass über einem bestimmten Schwellwert der Druckanschluss der Niederdruckpumpe mit dem ersten Ölreservoir verbunden wird.

Die JP 2005 172 112 A beschreibt eine Ölversorgungsvorrichtung mit einer durch eine Brennkraftmaschine angetriebenen ersten Pumpe und einer durch einen elektrischen Motor angetrieben zweiten Pumpe, wobei die erste Pumpe in eine ein erstes Rückschlagventil aufweisende erste Druckleitung und die zweite Pumpe eine ein zweites Rückschlagventil aufweisende zweite Druckleitung fördert. Die Druckleitungen der ersten und zweiten Pumpe münden in eine gemeinsame Ölpassage, die einerseits ein Schmiersystem und andererseits eine Hydraulikkammer versorgt. In einer von der gemeinsamen Ölpassage ausgehenden und zum Schmiersystem führenden Versorgungsleitung ist ein Steuerventil angeordnet, welches eine Steuerleitung aufweist, die von der Versorgungsleitung stromaufwärts des Steuerventils ausgeht. Zur Umgehung des Steuerventils ist eine Umgehungsleitung vorgesehen, die stromaufwärts des ersten Rückschlagventils von der ersten Druckleitung ausgeht.

Die DE 11 2018 000 706 T5 offenbart eine ähnliche Ölzufuhreinrichtung mit einer mechanischen ersten Pumpe und einer elektrischen zweiten Pumpe, wobei die erste Pumpe in eine erste Druckleitung und die zweite Pumpe in eine zweite Druckleitung fördert. Die Druckleitungen der ersten und zweiten Pumpe münden in eine gemeinsame Ölpassage, die einerseits ein Getriebe und andererseits eine Kupplung mit Öl versorgt. In einer zum Getriebe führenden Versorgungsleitung, die von der gemeinsamen Ölpassage ausgeht, ist ein Steuerventil angeordnet. Das Steuerventil ist über eine Bypassleitung umgehbar, welche von der ersten Druckleitung ausgeht.

Aus der US 9,574,655 B2 ist ein Hydraulikdruckzuführsystem eines Automatikgetriebes für ein Fahrzeug bekannt, welches eine Niederdruckhydraulikpumpe, ein Niederdruckregelventil, eine Hochdruckhydraulikpumpe, ein Hochdruckregelventil, ein erstes Schaltventil, das zwischen der Niederdruckhydraulikpumpe und dem Niederdruckregelventil angeordnet ist und die Niederdruckhydraulikpumpe mit dem Niederdruckregelventil wahlweise verbindet, aufweist. Das Hydraulikdruckzuführsystem weist weiters ein zweites Schaltventil, das eine erste Umlaufleitung, die einen Abstrom der Niederdruckhydraulikpumpe mit einem Zustrom des Hochdruckregelventils verbindet, wahlweise öffnet oder schließt, und ein drittes Schaltventil auf, das eine zweite Umlaufleitung, die einen Abstrom des Hochdruckregelventils mit einem Zustrom des Niederdruckregelventils verbindet, wahlweise öffnet oder schließt.

Die DE 10 2012 113 113 A1 zeigt ein Hydraulikdruckzuführsystem eines Automatikgetriebes für ein Fahrzeug, das niedrigen Hydraulikdruck und hohen Hydraulikdruck mittels eines in einer Ölwanne gespeicherten Öls erzeugt und den niedrigen Hydraulikdruck und den hohen Hydraulikdruck einem Niederdruckabschnitt bzw. einem Hochdruckabschnitt zuführt, wobei das Hydraulikdruckzuführsystem eine Niederdruck-Hydraulikpumpe, ein erstes Schaltventil, ein Niederdruck-Regelventil, das den Hydraulikdruck, der von dem ersten Schaltventil zugeführt wird, steuert und den Hydraulikdruck dem Niederdruckabschnitt zuführt. Weiters ist eine Hochdruck-Hydraulikpumpe, die einen erhöhten Hydraulikdruck an eine Hochdruckleitung abführt, ein zweites Schaltventil, das zwischen der ersten Niederdruckleitung und der Hochdruckleitung angeordnet ist, ein Hochdruck-Regelventil, das den von der Hochdruck-Hydraulikpumpe zugeführten Hydraulikdruck steuert und einen stabilen hohen Hydraulikdruck dem Hochdruckabschnitt zuführt, und eine Bypassleitung vorgesehen, die das erste Schaltventil umgeht.

Aufgabe der Erfindung ist es, auf möglichst einfache Weise in jedem Betriebspunkt eine bedarfsgerechte Ölversorgung zu gewährleisten.

Die Lösung dieser Aufgabe erfolgt durch eine Ölversorgungsreinrichtung nach Anspruch 1 und zwar bei einer Ölversorgungsvorrichtung der eingangs genannten Art dadurch, dass die erste Pumpe und die zweite Pumpe über eine gemeinsame Antriebswelle antreibbar sind und Teil einer Pumpeneinheit sind.

In einer konstruktiv einfachen Ausführungsvariante der Erfindung ist vorgesehen, dass die gemeinsame Antriebswelle ausgebildet ist, um mit einer insbesondere durch eine Brennkraftmaschine gebildeten Antriebsmaschine verbunden zu werden. Der Antrieb der ersten und der zweiten Pumpe erfolgt somit über nur eine Antriebsmaschine und über dieselbe Antriebswelle. Zwischen der ersten und der zweiten Pumpe ist also kein Getriebe zwischengeschaltet. Dies ermöglicht es, die erste Pumpe und die zweite Pumpe in eine gemeinsame Pumpeneinheit zu integrieren.

Besonders vorteilhaft ist es, wenn die Umgehungsleitung eine erste Drosseleinrichtung mit definiertem Querschnitt aufweist. Diese erste Drosseleinrichtung bestimmt die dem Schmier- und Kühlkreislauf zugeführte Mindestmenge des geförderten Mediums.

Das Steuerventil weist eine durch eine Ventilfeder definierte Schließposition, in welcher der Durchfluss in der ersten Versorgungsleitung gesperrt ist. Durch den Druck in der Steuerleitung kann das Steuerventil entgegen der Federkraft in seine Öffnungsposition gebracht bzw. in seiner Öffnungsposition gehalten, in welcher der Durchfluss in der ersten Versorgungsleitung voll geöffnet ist. Dazu muss der Druck in der Steuerleitung größer sein als ein definierter Schaltdruckwert des Steuerventils. Dieser Schaltdruckwert des Steuerventils ist vorteilhafterweise einstellbar.

Eine Ausführungsvariante der Erfindung sieht vor, dass in der ersten Steuerleitung eine zweite Drosseleinrichtung mit definiertem Querschnitt angeordnet ist. Dadurch lässt sich das Ansprechverhalten des Steuerventils genau vorbestimmen.

Ist der Druck in der Steuerleitung des Steuerventils geringer als der definierte Schaltdruckwert, so wird das Steuerventil von seiner Öffnungsposition in seine Schließposition geschaltet.

Sinkt also der Druck in der Versorgungsleitung unter die untere Druckgrenze, schließt das Steuerventil, der Druck in der ersten Druckleitung steigt auf den Druck in der zweiten Druckleitung, das Rückschlagventil öffnet und in der Versorgungsleitung kann ein erforderlicher Druck wieder erreicht werden. In diesem Ausnahmebetriebsfall versorgen die erste Pumpe gemeinsam mit der zweiten Pumpe die Versorgungsleitung.

Gleichzeitig wird durch die Umgehungsleitung sichergestellt, dass eine Mindestmenge des Mediums der Schmier- und Kühlleitung zugeführt wird, um eine ausreichende Versorgung des Schmier- und Kühlkreislaufes des Verzweigungsgetriebes mit Schmier- und Kühlmedium gewährleisten. Durch den Querschnitt der ersten Drosseleinrichtung wird der Mindestdurchfluss definiert. Weitere Steuerventile sind nicht erforderlich, sodass der konstruktive und bauliche Aufwand wesentlich geringer ist als beispielsweise bei der aus der DE 103 18 152 B4 bekannten Ölversorgungsvorrichtung.

Um eine definierte obere Druckgrenze in der zweiten Druckleitung und damit auch in der Versorgungsleitung nicht zu überschreiten, ist es vorteilhaft, wenn die zweite Druckleitung über ein Überlastventil mit dem Öltank oder Ölsumpf verbindbar ist, wobei das Überlastventil ausgebildet ist, um die zweite Druckleitung mit dem Ölsumpf oder den Hydrauliktank zu verbinden, wenn der Druck in der zweiten Druckleitung größer ist als ein oberer Grenzwert.

Zur Steuerung der unteren Druckgrenze ist gemäß einer Ausführungsvariante der Erfindung vorgesehen, dass die zweite Druckleitung über ein Unterlastventil mit zumindest einer Saugleitung der ersten Pumpe und/oder der zweiten Pumpe verbindbar ist, wobei das Unterlastventil ausgebildet ist, um die zweite Druckleitung mit der Saugleitung zu verbinden, wenn der Druck in der zweiten Druckleitung größer ist als ein geforderter Systemdruck der Versorgungsleitung und die Verbindung zu trennen, wenn der Druck in der zweiten Druckleitung gleich oder kleiner als der geforderter Systemdruck ist.

Die erste Saugleitung und die zweite Saugleitung können - vorzugsweise über eine gemeinsame Saugleitung - mit einem gemeinsamen Öltank verbunden sein.

In weiterer Ausführung der Erfindung ist vorgesehen, dass die Pumpeneinheit zusätzlich zur ersten und zur zweiten Pumpe mindestens eine Saugpumpe - vorzugsweise zwei Saugpumpen aufweist, die ausgebildet ist, um Öl aus einem Ölsumpf anzusaugen und - vorzugsweise über eine Filtervorrichtung - in den Öltank zu fördern, wobei vorzugsweise die Saugpumpe über die gemeinsame Antriebswelle angetrieben ist. Auf diese Weise lassen sich Ölversorgungsvorrichtungen in Trockensumpfbauweise auf einfache Weise realisieren.

Die Elemente Steuerventil, Überlastventil, Unterlastventil, Rückschlagventil, Umgehungsleitung und Drosseleinrichtung können in einer gemeinsamen Baugruppe Steuereinheit zusammengefasst sein.

Mit der kompakten und kostengünstigen Pumpeinheit mit relativ kleinen Schluckvolumina kann die Hochdruck- und Niederdruckversorgung eines Verzweigungsgetriebes in allen Betriebspunkten gewährleistet werden. Durch die aus den Baugruppen Pumpeinheit und Steuereinheit bestehende Baueinheit wird also in jedem Betriebspunkt eine bedarfsgerechte Ölversorgung für ein beispielsweise stufenloses Verzweigungsgetriebe sichergestellt.

Die Erfindung, welche durch die nachfolgenden Ansprüche definiert wird, wird im Folgenden anhand der in der Figur gezeigten nicht einschränkenden Ausführungsvariante näher erläutert.

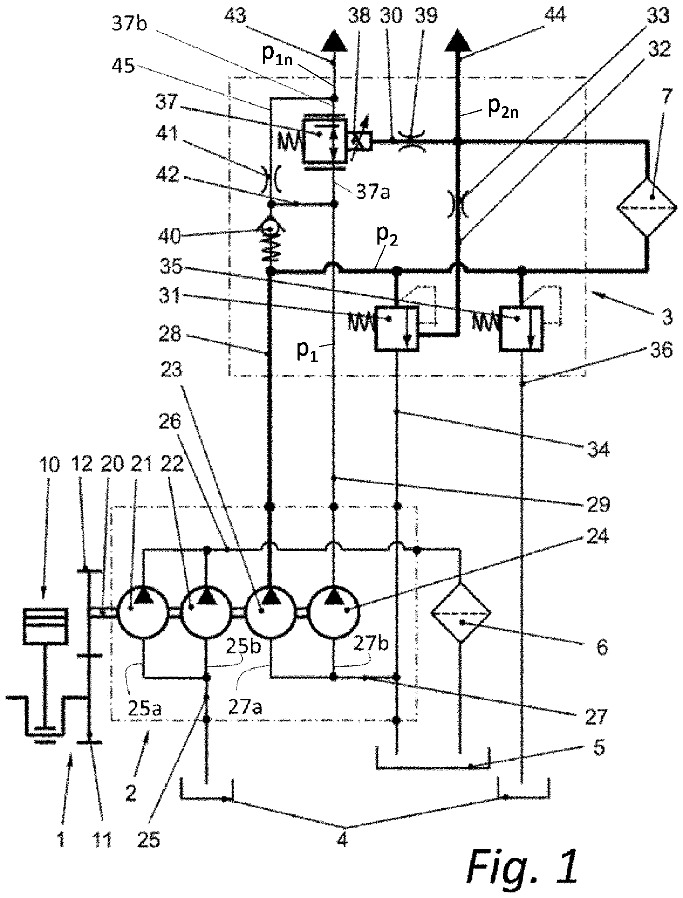

Die Fig. 1 zeigt schematisch eine erfindungsgemäße Ölversorgungsvorrichtung.

Die Ölversorgungsvorrichtung dient beispielsweise dazu, ein Verzweigungsgetriebe sowohl mit Öl über eine Schmierung und/oder Kühlleitung 43, als auch mit Öl über eine Versorgungsleitung 44 für die Betätigung des Getriebes zu versorgen. Die Baueinheit zur Ölversorgung besteht aus drei Baugruppen, einem Antrieb 1, einer Pumpeneinheit 2 und einer Steuereinheit 3. Der Antrieb 1 besteht aus einem Antriebsmotor 10 - beispielsweise einer Brennkraftmaschine -, der mit einer Übersetzungsstufe 11, 12 mit der Antriebswelle 20 der Pumpeneinheit 2 antriebsverbunden ist.

Die Pumpeneinheit 2 weist eine erste Pumpe 24, eine zweite Pumpe 23 und zwei hydraulisch parallel geschaltete Saugpumpen 21, 22 auf, welche als Verdrängerpumpen, insbesondere Zahnradpumpen - beispielsweise Gerotorpumpen -, mit gleichem Schluckvolumen ausgeführt sind. Die Pumpen 21, 22, 23, 24 sind mit der Antriebswelle 20 gekoppelt und werden von dieser angetrieben. Die Saugleitungen 25a, 25b der ersten Saugpumpe 21 und der zweiten Saugpumpe 22 gehen von einer gemeinsamen Saugleitung 25 aus, welche von dem Ölsumpf 4 ausgeht. Die gemeinsame Druckleitung 26 der Saugpumpen 21,22 mündet über eine erste Filtereinrichtung 6 in den Öltank 5. Die Saugleitungen 27a, 27b der ersten Pumpe 24 und der zweiten Pumpe 23 gehen von einer gemeinsamen Saugleitung 27 aus, welche von dem Öltank 5 ausgeht.

Die Steuereinheit 3 ist mit der zweiten Druckleitung 28 der zweiten Pumpe 23 und mit der ersten Druckleitung 29 der ersten Pumpe 24 verbunden. Die Steuereinheit 3 besteht im Wesentlichen aus dem Unterlastventil 31, dem Überlastventil 35, dem Steuerventil 37, einem federbelasteten Rückschlagventil 40, der ersten Drosseleinrichtung 41, der zweiten Drosseleinrichtung 39 und der dritten Drosseleinrichtung 33.

Die zweite Druckleitung 28 führt über eine zweite Filtervorrichtung 7 zur Versorgungsleitung 44. Von der zweiten Druckleitung 28 zweigt eine Rückflussleitung 34 ab, welche über das Unterlastventil 31 zur Saugleitung 27 und zum Öltank 5 führt. Die Entlastungsleitung 36 zweigt ebenfalls von der zweiten Druckleitung 28 ab und führt über das Überlastventil 35 zum Ölsumpf 4. Von der zweiten Druckleitung 28 zweigt eine erste Steuerleitung 30 ab und führt über die zweite Drosseleinrichtung 39 zum Betätigungsantrieb 38 des Steuerventils 37. Weiters zweigt von der zweiten Druckleitung 28 eine zweite Steuerleitung 32 ab, welche zum Unterlastventil 31 führt. Die erste Druckleitung 29 ist über das Steuerventil 37 mit der Schmier- und Kühlleitung 43 verbunden.

Zur Umgehung des Steuerventils 37 ist eine Umgehungsleitung 45 zwischen dem Steuerventileintritt 37a und dem Steuerventilaustritt 37b vorgesehen, wobei in der Umgehungsleitung 45 die erste Drosseleinrichtung 41 angeordnet ist. Die zweite Druckleitung 28 ist über das Rückschlagventil 40 und über die Verbindungsleitung 42 mit der Druckleitung 29 verbunden.

Durch das Überlastventil 35 wird die obere Druckgrenze in der Versorgungsleitung 44 und in der Druckleitung 28 limitiert. Das Überlastventil 35 öffnet, wenn der Druck p₂ in der zweiten Druckleitung 28 einen definierten Maximaldruck pₘₐₓ überschreitet. Das Öl wird dabei zum Ölsumpf 4 abgesteuert. Diese Druckbegrenzung stellt einen Überlastschutz, beispielsweise bei Kaltstart dar.

Die Steuerung der unteren Druckgrenze erfolgt über des Unterlastventil 31. Das Unterlastventil 31 muss dabei einen geforderten Systemdruck p₂ₙ für die Versorgungsleitung 44 sicherstellen. Das Unterlastventil 31 schließt, wenn der Druck p₂ in der zweiten Druckleitung 28 kleiner oder gleich dem geforderte Systemdruck p₂ₙ ist. Das Unterlastventil 31 ist geöffnet, wenn der Druck p₂ in der zweiten Druckleitung 28 größer ist als der geforderte Systemdruck p₂ₙ. In letzterem Fall wird ein Teil des Öls zur Saugleitung 27 rückgeführt.

Sinkt der Druck p₂ in der Versorgungsleitung 44 unter eine untere Druckgrenze pₘᵢₙ, schließt das Steuerventil 37, der Druck p₁ in der ersten Druckleitung 29 steigt über den Druck p₂ in der zweiten Druckleitung 28, das Rückschlagventil 40 öffnet und in der Versorgungsleitung 44 kann ein definierter erforderlicher Druck p₂ₙ wieder erreicht werden. In diesem Ausnahmebetriebsfall versorgen die erste Pumpe 24 gemeinsam mit der zweiten Pumpe 23 die Versorgungsleitung 44.

Steigt der Druck p₂ in der Versorgungsleitung 44, beispielsweise im Fall eines Antriebsdrehzahlanstieges oder einer Lastrücknahme, über die untere Druckgrenze pₘᵢₙ, öffnet das Steuerventil 37, wodurch der Druck p₁ in der ersten Druckleitung 29 auf den mit dem Betätigungsantrieb 38 einstellbaren und eingestellten Druck p₁ₙ der Schmier- und Kühlleitung 43 sinkt, welcher wesentlich kleiner ist als der Druck p₂ₙ in der Versorgungsleitung 44. Mit anderen Worten, die erste Pumpe 24 wird von der Versorgung der Versorgungsleitung 44 weggeschaltet. Dies stellt den Standardbetriebsfall für die Ölversorgung des Verzweigungsgetriebes dar.

Durch das Steuerventil 37 mit der einstellbaren Betätigungseinrichtung 38 wird nach einem möglichen drehzahlbedingten Absinken des Druckes p₂ in der Versorgungsleitung 44 unter die untere Druckgrenze pₘᵢₙ das Steuerventil 37 geschlossen. Dadurch kann neben der zweiten Pumpe 23 die erste Pumpe 24 für die Sicherstellung des geforderten Druckes p₂ₙ in der Versorgungsleitung 44 verwendet werden. Das Fördervolumen für die Versorgungsleitung 44 kann somit fast verdoppelt werden. Durch die Umgehung des Steuerventiles 37 über die Umgehungsleitung 45 kann eine Versorgung der Schmier- und Kühlleitung 43 aufrechterhalten werden, wobei die Mindestmenge an Öl für die Schmier- und Kühlleitung 43 über die Dimensionierung der ersten Drosseleinrichtung 41 festgelegt wird.

Die erfindungsgemäße Ölversorgungsvorrichtung weist folgende Vorteile auf:
- hoher hydraulisch-mechanischer Wirkungsgrad;
- hoher volumetrischer Wirkungsgrad durch Anpassung des effektiven Ölförderstroms;
- kompakte, kostengünstige Bauweise durch Koppelung von Gerotorpumpen gleichen Schluckvolumens;
- kleiner Bauraum durch Integration der Baugruppen Pumpeneinheit 2 und Steuereinheit 3 in einer Baueinheit;
- Reduktion der Bauteile.

### Bezugszeichenliste:

- 1: Antrieb
- 2: Pumpeneinheit
- 3: Steuereinheit
- 4: Ölsumpf
- 5: Öltank
- 6: erste Filtervorrichtung
- 7: zweite Filtervorrichtung

- 10: Antriebsmaschine
- 11: Übersetzungsstufe
- 12: Übersetzungsstufe

- 20: Antriebswelle
- 21: Saugpumpe
- 22: Saugpumpe
- 23: zweite Pumpe
- 24: erste Pumpe
- 25: Saugleitung
- 26: Druckleitung
- 27: gemeinsame Saugleitung
- 27a: erste Saugleitung
- 27b: zweite Saugleitung
- 28: zweite Druckleitung
- 29: erste Druckleitung
- 30: erste Steuerleitung
- 31: Unterlastventil
- 32: zweite Steuerleitung
- 33: Drossel
- 34: Rückflussleitung
- 35: Überlastventil
- 36: Entlastungsleitung
- 37: Steuerventil
- 37a: Steuerventileintritt
- 37b: Steuerventilaustritt
- 38: Betätigungsantrieb
- 39: zweite Drosseleinrichtung
- 40: Rückschlagventil
- 41: erste Drosseleinrichtung
- 42: Verbindungsleitung
- 43: Schmier- und Kühlleitung
- 44: Versorgungsleitung
- 45: Umgehungsleitung

## Patentansprüche

1. Ölversorgungsvorrichtung für den Hydraulikkreislauf eines Getriebes, insbesondere eines Verzweigungsgetriebes, mit zumindest einer ersten Pumpe (24) und einer zweiten Pumpe (23), wobei die erste Pumpe (24) eine mit einer Schmier- und Kühlleitung (43) verbindbare erste Druckleitung (29) und eine mit einem Öltank (5) verbundene erste Saugleitung (27a) und die zweite Pumpe (23) eine mit einer Versorgungsleitung (44) zur Betätigung des Getriebes verbundene oder verbindbare zweite Druckleitung (28) und eine mit dem Öltank (5) verbundene zweite Saugleitung (27b) aufweist, wobei in der ersten Druckleitung (29) ein Steuerventil (37) angeordnet ist, welches eine mit der zweiten Druckleitung (28) verbundene erste Steuerleitung (30) aufweist und ausgebildet ist, um die erste Druckleitung (29) zu sperren, wenn der Druck (p₂) in der zweiten Druckleitung (28) unterhalb eines definierten Schaltdruckwertes liegt, und wobei die erste Druckleitung (29) und die zweite Druckleitung (28) über ein in Richtung der zweiten Druckleitung (28) öffnendes Rückschlagventil (40) verbunden sind, wobei zur Umgehung des Steuerventils (37) eine Umgehungsleitung (45) zwischen einem Steuerventileintritt (37a) und einem Steuerventilaustritt (37b) des Steuerventils (37) angeordnet ist, **dadurch gekennzeichnet, dass** die erste Pumpe (24) und die zweite Pumpe (23) über eine gemeinsame Antriebswelle (20) antreibbar sind und Teil einer Pumpeneinheit (2) sind.

2. Ölversorgungsvorrichtung nach Anspruch 1, **dadurch gekennzeichnet, dass** die Umgehungsleitung (45) eine erste Drosseleinrichtung (41) mit definiertem Querschnitt aufweist.

3. Ölversorgungsvorrichtung nach Anspruch 1 oder 2, **dadurch gekennzeichnet, dass** die zweite Druckleitung (28) über ein Überlastventil (35) mit einem Ölsumpf (4) oder dem Öltank (5) verbindbar ist, wobei das Überlastventil (35) ausgebildet ist, um die zweite Druckleitung (28) mit dem Ölsumpf (4) oder den Öltank (5) zu verbinden, wenn der Druck (p₂) in der zweiten Druckleitung (28) größer ist als ein definierter Maximaldruck (pₘₐₓ) und die Verbindung zu trennen, wenn der Druck (p₂) in der zweiten Druckleitung (28) gleich oder kleiner als der definierte Maximaldruck (pₘₐₓ) ist.

4. Ölversorgungsvorrichtung nach einem der Ansprüche 1 bis 3, **dadurch gekennzeichnet, dass** die zweite Druckleitung (28) über ein Unterlastventil (31) mit zumindest einer Saugleitung (27, 27a, 27b) der ersten Pumpe (24) und/oder der zweiten Pumpe (23) verbindbar ist, wobei das Unterlastventil (31) ausgebildet ist, um die zweite Druckleitung (28) mit der Saugleitung (27, 27a, 27b) zu verbinden, wenn der Druck (p₂) in der zweiten Druckleitung (28) größer ist als der geforderter Systemdruck (p₂ₙ) und die Verbindung zu trennen, wenn der Druck (p₂) in der zweiten Druckleitung (28) gleich oder kleiner als der geforderter Systemdruck (p₂ₙ) ist .

5. Ölversorgungsvorrichtung nach einem der Ansprüche 1 bis 4, **dadurch gekennzeichnet, dass** der Schaltdruckwert das Steuerventils (37) einstellbar ist.

6. Ölversorgungsvorrichtung nach einem der Ansprüche 1 bis 5, **dadurch gekennzeichnet, dass** in der ersten Steuerleitung (30) eine zweite Drosseleinrichtung (39) mit definiertem Querschnitt angeordnet ist.

7. Ölversorgungsvorrichtung nach einem der Ansprüche 1 bis 6, **dadurch gekennzeichnet, dass** die erste Saugleitung (27a) und die zweite Saugleitung (27b) - vorzugsweise über eine gemeinsame Saugleitung (27) - mit dem Öltank (5) verbunden sind.

8. Ölversorgungsvorrichtung nach einem der Ansprüche 1 bis 7, **dadurch gekennzeichnet, dass** die gemeinsame Antriebswelle (20) ausgebildet ist, um mit einer insbesondere durch eine Brennkraftmaschine gebildeten Antriebsmaschine (10) verbunden zu werden.

9. Ölversorgungsvorrichtung nach einem der Ansprüche 1 bis 8, **dadurch gekennzeichnet, dass** die Pumpeneinheit (2) weiters mindestens eine Saugpumpe (21, 22) - vorzugsweise zwei Saugpumpen (21, 22) - aufweist, die ausgebildet ist/sind, um Öl aus einem Ölsumpf (4) anzusaugen und - vorzugsweise über eine Filtervorrichtung (6) - in den Öltank (5) zu fördern, wobei vorzugsweise die Saugpumpe(n) (21, 22) über die gemeinsame Antriebswelle (20) angetrieben ist/sind.

10. Ölversorgungsvorrichtung nach einem der Ansprüche 1 bis 9, **dadurch gekennzeichnet, dass** zumindest die erste Pumpe (24) und die zweite Pumpe (23) - vorzugsweise auch die Saugpumpe(n) (21, 22) - das gleiche Schluckvolumen aufweisen.

## Claims

1. Oil supply device for the hydraulic circuit of a transmission, in particular a branch transmission, having at least a first pump (24) and a second pump (23), wherein the first pump (24) has a first pressure line (29) connectable to a lubrication and cooling line (43) and a first suction line (27a) connected to an oil tank (5), and the second pump (23) has a second pressure line (28) connected or connectable to a supply line (44) for actuating the transmission and a second suction line (27b) connected to the oil tank (5), wherein a control valve (37) is arranged in the first pressure line (29), which control valve has a first control line (30) connected to the second pressure line (28) and is designed to block the first pressure line (29) when the pressure (p₂) in the second pressure line (28) is below a defined switching pressure value, and wherein the first pressure line (29) and the second pressure line (28) are connected to a check valve (40) opening in the direction of the second pressure line (28), wherein a bypass line (45) is arranged between a control valve inlet (37a) and a control valve outlet (37b) of the control valve (37) in order to bypass the control valve (37), **characterised in that** the first pump (24) and the second pump (23) can be driven via a common drive shaft (20) and are part of a pump unit (2).

2. Oil supply device according to claim 1, **characterised in that** the bypass line (45) has a first throttle device (41) with a defined cross-section.

3. Oil supply device according to claim 1 or 2, **characterised in that** the second pressure line (28) can be connected to an oil sump (4) or the oil tank (5) via an overload valve (35), wherein the overload valve (35) is designed to connect the second pressure line (28) to the oil sump (4) or the oil tank (5) when the pressure (p₂) in the second pressure line (28) is greater than a defined maximum pressure (pₘₐₓ) and to disconnect the connection when the pressure (p₂) in the second pressure line (28) is equal to or less than the defined maximum pressure (pₘₐₓ).

4. Oil supply device according to one of claims 1 to 3, **characterised in that** the second pressure line (28) is connectable via an underload valve (31) to at least one suction line (27, 27a, 27b) of the first pump (24) and/or the second pump (23), wherein the underload valve (31) is designed to connect the second pressure line (28) to the suction line (27, 27a, 27b) when the pressure (p₂) in the second pressure line (28) is greater than the required system pressure (p₂ₙ) and to disconnect the connection when the pressure (p₂) in the second pressure line (28) is equal to or less than the required system pressure (p₂n).

5. Oil supply device according to one of claims 1 to 4, **characterised in that** the switching pressure value of the control valve (37) is adjustable.

6. Oil supply device according to one of claims 1 to 5, **characterised in that** a second throttle device (39) with a defined cross-section is arranged in the first control line (30).

7. Oil supply device according to one of claims 1 to 6, **characterised in that** the first suction line (27a) and the second suction line (27b) are connected to the oil tank (5), preferably via a common suction line (27).

8. Oil supply device according to one of claims 1 to 7, **characterised in that** the common drive shaft (20) is designed to be connected to a drive machine (10) formed in particular by an internal combustion engine.

9. Oil supply device according to one of claims 1 to 8, **characterised in that** the pump unit (2) further comprises at least one suction pump (21, 22), preferably two suction pumps (21, 22), which is/are designed to suck oil from an oil sump (4) and to feed it into the oil tank (5), preferably via a filter device (6), wherein the suction pump(s) (21, 22) is/are preferably driven via the common drive shaft (20).

10. Oil supply device according to one of claims 1 to 9, **characterised in that** at least the first pump (24) and the second pump (23), preferably also the suction pump(s) (21, 22), have the same displacement.

## Revendications

1. Dispositif d'alimentation en huile d'un circuit hydraulique d'une transmission, en particulier d'une transmission de bifurcation, comprenant au moins une première pompe (24) et une deuxième pompe (23), dans lequel la première pompe (24) a un premier conduit (29) de refoulement pouvant communiquer avec un conduit (43) de lubrification et de refroidissement et un premier conduit (27a) d'aspiration communiquant avec un réservoir (5) d'huile et la deuxième pompe (23) a un deuxième conduit (28) de refoulement communiquant ou pouvant communiquer avec un conduit (44) d'alimentation pour l'actionnement de la transmission et un deuxième conduit (27b) d'aspiration communiquant avec le réservoir (5) d'huile, dans lequel il est monté dans le premier conduit (29) de refoulement une soupape (37) de commande, qui a un premier conduit (30) de commande communiquant avec le deuxième conduit (28) de refoulement et qui est constituée pour barrer le premier conduit (29) de refoulement, si la pression (p₂) dans le deuxième conduit (28) de refoulement est en dessous d'une valeur de pression de commutation définie, et dans lequel le premier conduit (29) de refoulement et le deuxième conduit (28) de refoulement communiquent par un clapet (40) antiretour s'ouvrant dans le sens du deuxième conduit (28) de refoulement, dans lequel, pour le contournement de la soupape (37) de commande, un conduit (45) de contournement est monté entre une entrée (37a) et une sortie (37b) de la soupape (37) de commande **caractérisé en ce que** la première pompe (24) et la deuxième pompe (23) peuvent être entraînées par un arbre (20) d'entraînement commun et font partie d'un groupe (2) de pompage.

2. Dispositif d'alimentation en huile suivant la revendication 1, **caractérisé en ce que** le conduit (45) de contournement a un premier dispositif (41) d'étranglement de section transversale définie.

3. Dispositif d'alimentation en huile suivant la revendication 1 ou 2, **caractérisé en ce que** le deuxième conduit (28) de refoulement, peut, par une soupape (35) de surcharge, communiquer avec un bain (4) d'huile ou avec le réservoir (5) d'huile, dans lequel la soupape (35) de surcharge est constituée pour mettre le deuxième (28) de refoulement en communication avec le bain (4) d'huile ou avec le réservoir (5) d'huile, si la pression (p₂) dans le deuxième conduit (28) de refoulement est plus grande qu'une pression (pₘₐₓ) maximum définie, et pour couper la communication, si la pression (p₂) dans le deuxième conduit (28) de refoulement est inférieure ou égale à la pression (pₘₐₓ) maximum définie.

4. Dispositif d'alimentation en huile suivant l'une des revendications 1 à 3, **caractérisé en ce que** le deuxième conduit (28) de refoulement peut, par une soupape (31) sous-charge, communiquer avec au moins un conduit (27, 27a, 27b) d'aspiration de la première pompe (24) et/ou de la deuxième pompe (23), dans lequel la soupape (31) de sous-charge est constituée pour mettre le deuxième conduit (28) de refoulement en communication avec le conduit (27, 27a, 27b) d'aspiration, si la pression (p₂) dans le deuxième conduit (28) de refoulement est plus grande que la pression (p₂ₙ) de système exigée, et pour couper la communication, si la pression (p₂) dans le deuxième conduit (28) de refoulement est inférieure ou égale à la pression (p₂ₙ) de système exigée.

5. Dispositif d'alimentation en huile suivant l'une des revendications 1 à 4, **caractérisé en ce que** la valeur de pression de commutation de la soupape (37) de commande est réglable.

6. Dispositif d'alimentation en huile suivant l'une des revendications 1 à 5, **caractérisé en ce qu'**un deuxième dispositif (39) d'étranglement de section transversale définie est monté dans le premier conduit (30) de commande.

7. Dispositif d'alimentation en huile suivant l'une des revendications 1 à 6, **caractérisé en ce que** le premier conduit (27a) d'aspiration et le deuxième conduit (27b) d'aspiration communiquent - de préférence par un conduit (27) d'aspiration commun - avec le réservoir (5) d'huile.

8. Dispositif d'alimentation en huile suivant l'une des revendications 1 à 7, **caractérisé en ce que** l'arbre (20) d'entraînement commun est constitué pour être assemblé à une machine (10) d'entraînement formée en particulier par un moteur à combustion interne.

9. Dispositif d'alimentation en huile suivant l'une des revendications 1 à 8, **caractérisé en ce que** le groupe (2) de pompage a en outre au moins une pompe (21, 22) d'aspiration - de préférence deux pompes (21, 22) d'aspiration - qui est/sont constituées pour aspirer de l'huile d'un bain (4) d'huile et pour la refouler - en passant de préférence par un dispositif (6) de filtration - dans le réservoir (5) d'huile, dans lequel de préférence la ou les pompes (21, 22) d'aspiration est/sont entraînées par un arbre (20) d'entraînement commun.

10. Dispositif d'alimentation en huile suivant l'une des revendications 1 à 9, **caractérisé en ce qu'**au moins la première pompe (24) et la deuxième pompe (23) - de préférence également la ou les pompes (21, 22) d'aspiration - ont le même volume absorbé par tour.
